# EUROPEAN PATENT APPLICATION

(11) **EP 4 578 669 A1**
(43) Date of publication of application: **02.07.2025**
(21) Application number: 24164134.9
(22) Date of filing: 18.03.2024
(51) Int. Cl.: B60C 11/03, B60C 11/11, B60C 11/13

(54) **TIRE CAPABALE OF ENHANCING TREAD RIGIDITY AND REDUCING TREAD NOISE**

(30) Priority: 29.12.2023 TW 112151618
(71) Applicant: Cheng Shin Rubber Ind. Co., Ltd., Changhua County 51545 (TW)
(72) Inventor: LEE, YU-JU, 51545 CHANGHUA COUNTY (TW)
(74) Representative: Straus, Alexander

(57) **Abstract**

A tire (10) includes a tire body (20) and a plurality of tread pattern structures (30) formed at a center of a tread surface (22) of the tire body (20) and arranged along a rotational direction (D) of the tire (10). The tread pattern structures (30) each have a tread pattern block (31) provided with a front end surface (312) facing towards the rotational direction (D) of the tire (10) and a rear end surface (314) facing away from the rotational direction (D) of the tire (10), and at least one stepped block (33, 34) connected with the rear end surface (314) of the tread pattern block (31) and having a height (H1, H2) lower than a height (H3) of the tread pattern block (31). As such, the tire (10) of the present invention can achieve effects of enhancing tread rigidity, increasing high-speed stability, and reducing tread noise.

## Description

### BACKGROUND OF THE INVENTION

### 1. Field of the Invention

The present invention relates to tires and more particularly, to a tire that can enhance tread rigidity and reduce tread noise.

### 2. Description of the Related Art

TW I494230 discloses a tire that provides a plurality of tread pattern blocks on the tread portion. At least one of the tread pattern blocks includes a top surface, a heel-side sidewall surface extending from a heel-side edge of the top surface, and a toe-side sidewall surface extending from a toe-side edge of the top surface. The toe-side sidewall surface is considered as being made up of a radially outer region extending inclinedly inwardly towards the toe-side sidewall surface and a radially inner region extending inwardly from the radially outer region. Such a structural design can maintain traction and improve braking stability, but it cannot achieve the effects of increasing tread rigidity and reducing tread noise.

CN 103370213 discloses a pneumatic tire that provides a plurality of blocks on the tread surface. The blocks each includes a reduced thickness portion in an overlapping region where the blocks overlap in projection. The reduced thickness portion includes at least two portions where the thickness of the block gradually decreases. Such a structural design can maintain good mud drainage while also achieving good traction performance, but it cannot achieve the effects of increasing tread rigidity and reducing tread noise.

CN 101588935 discloses a tire that provides a plurality of blocks on the tread surface. The blocks each have a contact face, a trailing face, a leading face, and two longitudinal faces. A step is formed on the leading face to improve wear performance of the tire. However, such a structural design cannot achieve the effects of increasing tread rigidity and reducing tread noise.

US 11633987 discloses a tire that includes a tread portion and a land portion. The land portion includes a land sidewall facing a circumferential groove and having a first surface, a second surface, and a stair portion formed between the first surface and the second surface to improve driving performance on snow. However, such a structural design cannot achieve the effects of increasing tread rigidity and reducing tread noise.

### SUMMARY OF THE INVENTION

It is one objective of the present invention to provide a tire, which can enhance tread rigidity, increase high-speed stability, and reduce tread noise.

To attain the above objective, the tire of the present invention comprises a tire body and a plurality of tread pattern structures. The tread pattern structures are mounted on a center of a tread surface of the tire body and arranged along a rotational direction of the tire. The tread pattern structures each have a tread pattern block provided with a front end surface facing towards the rotational direction of the tire and a rear end surface facing away from the rotational direction of the tire, and at least one stepped block connected with the rear end surface of the tread pattern block and having a height lower than a height of the tread pattern block.

It can be seen from the above that the tire of the present invention uses the stepped block arranged on the rear end surface of the tread pattern block to apply a supporting force to the tread pattern block during rotation. Through the arrangement of the stepped block, the deformation of the tread surface under the influence of high centrifugal forces can be effectively suppressed, thereby improving rigidity and high-speed stability of the tread surface, and the vibration generated by the impact of the tread surface with the ground can be also suppressed to achieve the effect of reducing tread noise.

Preferably, the tread pattern structures each have a groove formed at a center of the tread pattern block and extending along the rotational direction of the tire. In this way, the groove is used for soil embedding to improve off-road performance.

Preferably, the stepped block is two in number and is respectively a first stepped block and a second stepped block. The first stepped block is connected between the tread pattern block and the second stepped block and has a height higher than a height of the second stepped block. Through the arrangement of the first and second stepped blocks, the rigidity and high-speed stability of the tread surface can be further improved and the noise generated by the impact of the tread surface on the ground can be reduced.

Preferably, an arc length of the second stepped block is less than an arc length of the first stepped block. Through the tapered design, the force can be further concentrated to improve stability.

Preferably, the tread pattern structures are arranged in an equally-spaced manner along the rotational direction of the tire. This allows a space for soil to be embedded between the two adjacent tread pattern structures to improve off-road performance.

Preferably, the tread pattern blocks each have a polygonal shape to provide guidance.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a perspective view of a tire of the present invention.
FIG. 2 is a top view of the tire of the present invention.
FIG. 3 is an enlarged view of the tire of the present invention.
FIG. 4 is a sectional view of a tire pattern block provided by the tire of the present invention.
FIG. 5a is a partial enlarged view of the tire of the present invention, showing the different sections taken when testing tread rigidity.
FIG. 5b is a graph of the tire of the present invention, showing the relationship between different sections and tread rigidity.
FIG. 6 is a graph of the tire of the present invention, showing the relationship between speed and decibels.

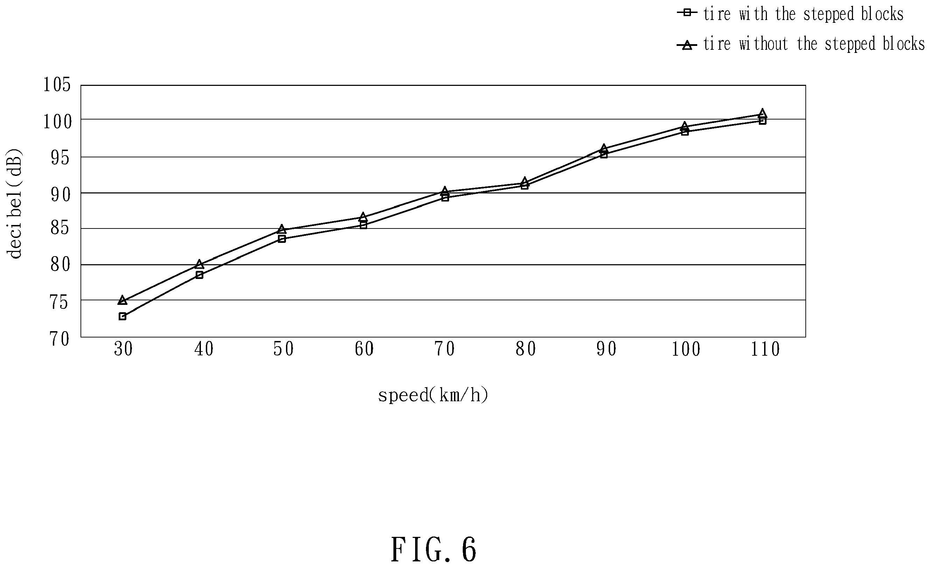

FIG. 6 is a graph of the tire of the present invention, showing the relationship between frequency and decibels.

### DETAILED DESCRIPTION OF THE INVENTION

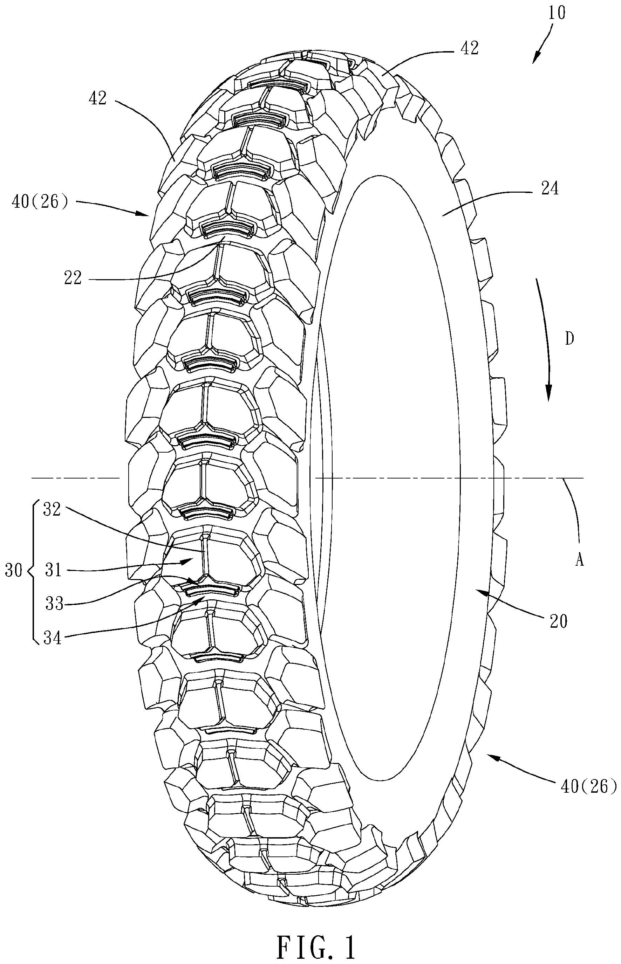

As shown in FIG. 1, a tire 10 of the present invention rolls forward around a rotational axis A and along a rotational direction D, comprising a tire body 20, a plurality of tread pattern structures 30, and a plurality of shoulder pattern structures 40.

The tire body 20 includes a tread surface 22, two sidewalls 24, and two shoulders 26 integrally connected between the tread surface 22 and the sidewalls 24.

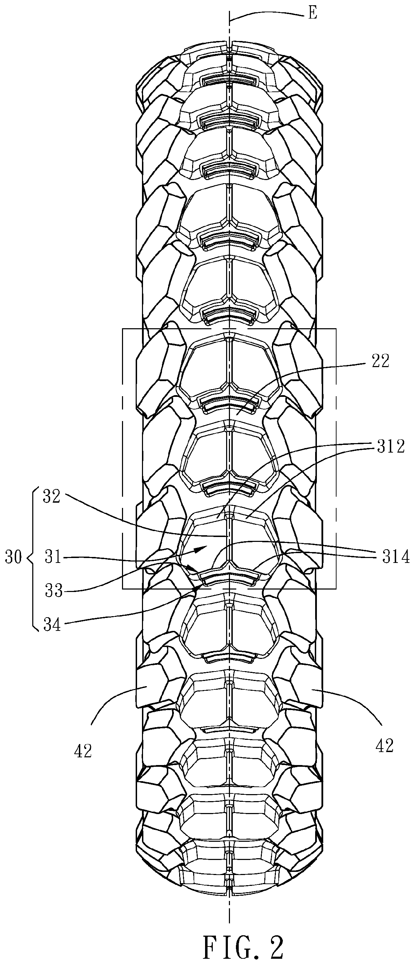

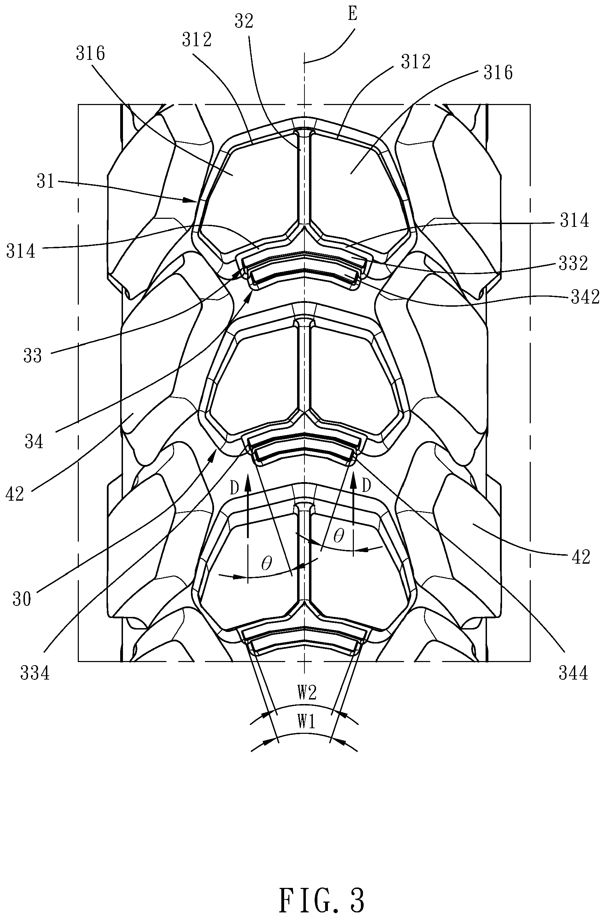

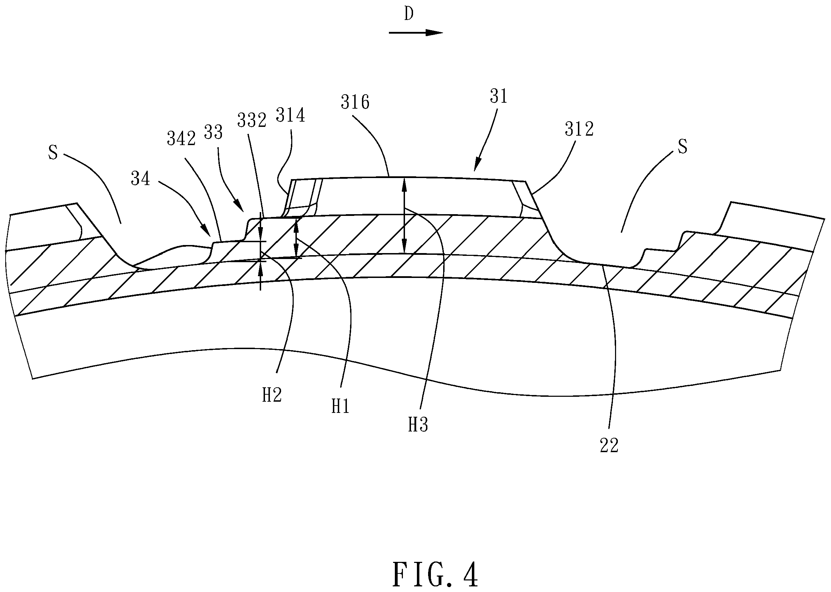

The tread pattern structures 30 are integrally formed on the center of the tread surface 22 of the tire body 20 and arranged in an equally-spaced manner along the rotational direction D of the tire 10. As shown in FIGS. 2 and 3, the tread pattern structures 30 each have a tread pattern block 31 and a groove 32. The tread pattern block 31 is polygonal and symmetrical with respect to an equatorial plane E of the tire 10 (here, the equatorial plane E is a plane perpendicular to the rotational axis A of the tire 10 and passing through the center of the tread surface 22). The groove 32 is located at the center of the tread pattern block 31 and extends along the rotational direction D of the tire 10 and passes through the equatorial plane E. As shown in FIGS. 3 and 4, the tread pattern block 31 has a front end surface 312 facing towards the rotational direction D of the tire 10, a rear end surface 314 facing away from the rotational direction D of the tire 10, and a contact surface 316 connected with the front and rear end surfaces 312, 314. In addition, the tread pattern block 31 further has a first stepped block 33 provided with a contact surface 332 for contacting with the ground and a second stepped block 34 provide with a contact surface 342 for contacting with the ground. The first stepped block 33 is integrally connected between the rear end surface 314 and the second stepped block 34. As shown in FIG. 4, the first stepped block 33 has a height H1 lower than a height H3 of the tread pattern block 31 and higher than a height H2 of the tread pattern block 31. In this embodiment, H1 is twice H2. In addition, as shown in FIG. 3, an arc length W2 of the second stepped block 34 is less than an arc length W1 of the first stepped block 33. In this embodiment, W2 is 0.75-0.8 times W1, such that the first and second stepped blocks 33, 34 are arranged in a tapered manner, and further, an included angle *θ* is formed between the outer end surface 334 of the first stepped block 33 and the rotational direction D and formed between the outer end surface 344 of the second stepped block 34 and the rotational direction D. In this embodiment, the included angle *θ* is between 5-30 degrees.

The shoulder pattern structures 40 are integrally formed on the two shoulders 26 of the tire body 20. As shown in FIGS. 1 and 2, the shoulder pattern structures 40 each have a plurality of polygonal shoulder pattern blocks 42 arranged in an equally-spaced manner along the rotational direction D of the tire 10 for providing steering stability.

It can be seen from the above that during the process of moving forward along the rotational direction D, the tire 10 of the present invention first contacts the ground with the front end surfaces 312 of the tread pattern blocks 31, and then contacts the ground with the contact surfaces 316 of the tread pattern blocks 31, and finally contacts the ground with one of the contact surfaces 332, 334 of the first and second stepped blocks 33, 34 according to different road conditions. By setting the first and second stepped blocks 33, 34, the deformation of the tread surface 22 under the influence of high centrifugal forces can be effectively suppressed, thereby enhancing rigidity and high-speed stability of the tread surface 22, and the vibration generated by the impact of the tread surface 22 with the ground can be also suppressed to achieve the effect of reducing tread noise. The first and second stepped blocks 33, 34 are arranged in a tapered manner in term of the arc length, further concentrating forces to enhance high-speed stability. In addition, during the process of moving forward along the rotational direction D, the tire 10 of the present invention can also enhance off-road performance by allowing soil embedding through the grooves 32, and further, the two adjacent tread pattern structures 30 are not connected with each other, thus leaving a space S for soil embedding between them (as shown in FIG. 4), thereby enhancing off-road performance.

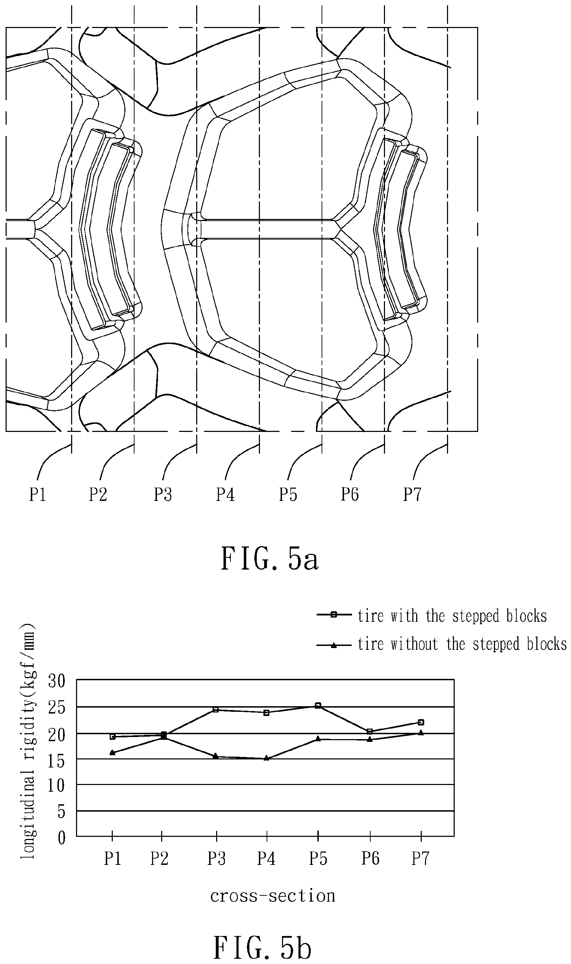

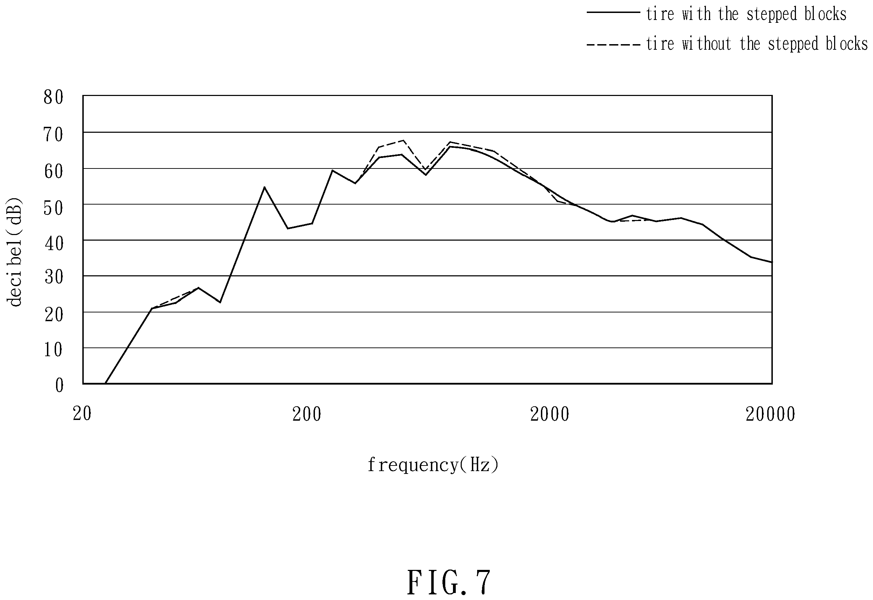

On the other side, as shown in FIGS. 5a and 5b, it can be seen in FIG. 5a that under different cross-sections P1-P7 (the cross-sections P1-P7 referred to here are planes perpendicular to the equatorial plane E and are equally divided into 7 positions with a width of about 1.5 cm), the tire 10 with the stepped blocks has much greater longitudinal rigidity than the traditional tire without the stepped blocks. The test condition in FIG. 5b includes an air pressure of 180 kPa and a load of 130 kgf. It can be seen in FIG. 6 that at different speeds, the tread noise of the tire 10 with the stepped blocks is lower than that of the traditional tire without stepped blocks. The test method in FIG. 6 is based on the JASO standard (JASO C606) with an air pressure of 180 kPa and a load of 130 kgf. In FIG. 7, it can be observed that the tread noise of the tire 10 with the stepped blocks in the mid-frequency range (200-2000Hz) is lower than that of the traditional tire without the stepped blocks. That is to say, compared with the traditional tire without the stepped blocks, the tire 10 of the present invention indeed has better tread rigidity and tread noise reduction effect.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A tire (10) **characterized in that** comprising:
a tire body (20) having a tread surface (22); and
a plurality of tread pattern structures (30) formed at a center of the tread surface (22) of the tire body (20) and arranged along a rotational direction (D) of the tire (10), the tread pattern structures (30) each having a tread pattern block (31) provided with a front end surface (312) facing towards the rotational direction (D) of the tire (10) and a rear end surface (314) facing away from the rotational direction (D) of the tire (10), and at least one stepped block (33, 34) connected with the rear end surface (314) of the tread pattern block (31) and having a height (H1, H2) lower than a height (H3) of the tread pattern block (31).

2. The tire (10) as claimed in claim 1, **characterized in that** the tread pattern structures (30) each have a groove (32) formed at a center of the tread pattern block (31) and extending along the rotational direction (D) of the tire (10).

3. The tire (10) as claimed in claim 1 or 2, **characterized in that** said at least one stepped block (33, 34) is two in number and is respectively a first stepped block (33) and a second stepped block (34); the first stepped block (33) is connected between the tread pattern block (31) and the second stepped block (34) and has a height (H1) higher than a height (H2) of the second stepped block (34).

4. The tire (10) as claimed in claim 3, **characterized in that** the height (H1) of the first stepped block (33) is twice the height (H2) of the second stepped block (34).

5. The tire (10) as claimed in claim 3, **characterized in that** an arc length (W2) of the second stepped block (34) is less than an arc length (W1) of the first stepped block (33).

6. The tire (10) as claimed in claim 5, **characterized in that** the arc length (W2) of the second stepped block (34) is 0.75-0.8 times the arc length (W1) of the first stepped block (33).

7. The tire (10) as claimed in claim 1, **characterized in that** the tread pattern structures (30) are arranged in an equally-spaced manner along the rotational direction (D) of the tire (10).

8. The tire (10) as claimed in claim 1, **characterized in that** the tread pattern blocks (31) each have a polygonal shape.
